# EUROPEAN PATENT APPLICATION

(11) **EP 3 985 991 A1**
(43) Date of publication of application: **20.04.2022**
(21) Application number: 20822764.5
(22) Date of filing: 09.06.2020
(51) Int. Cl.: H04Q 11/00

(54) **BANDWIDTH ASSIGNMENT METHOD AND APPARATUS, AND BANDWIDTH CHECK METHOD AND APPARATUS**

(30) Priority: 14.06.2019 CN 201910517632
(71) Applicant: ZTE Corporation, Shenzhen, Guangdong 518057 (CN)
(72) Inventor: ZHANG, Weiliang, Shenzhen, Guangdong 518057 (CN); YUAN, Liquan, Shenzhen, Guangdong 518057 (CN); WEI, Junshan, Shenzhen, Guangdong 518057 (CN); GUO, Yong, Shenzhen, Guangdong 518057 (CN)
(74) Representative: Novagraaf Technologies
(86) International application number: PCT/CN2020/095194
(87) International publication number: WO 2020/248980

(57) **Abstract**

The embodiments of the present disclosure provide a bandwidth assignment method and apparatus, and a bandwidth check method and apparatus. Specifically, the bandwidth assignment method includes that: first relevant information about a bandwidth assigned to an Optical Network Unit (ONU) is obtained, wherein the first relevant information at least includes service control signaling in a bandwidth-related protocol packet; and the first relevant information is converted into first bandwidth information, and a bandwidth is assigned to the ONU according to the first bandwidth information, wherein the first bandwidth information includes: a bandwidth size corresponding to the bandwidth assigned to the ONU, a delay corresponding to the bandwidth assigned to the ONU, and a start time corresponding to the bandwidth assigned to the ONU. By means of the embodiments of the present disclosure, the problem in the related art of the difficulty of a Passive Optical Network (PON) system in meeting the transmission delay requirements required by a mobile service is solved, thereby achieving the effect of reducing the transmission delay of the PON system.

## Description

### Technical Field

Embodiments of the present disclosure relate to the field of communications, in particular to a bandwidth assignment method and apparatus, and a bandwidth check method and apparatus.

### Background

A Passive Optical Network (PON) architecture is a point-to-multipoint network architecture, consisting of an Optical Line Terminal (OLT), an Optical Distribute Network (ODN) and an Optical Network Unit (ONU). The OLT is connected to multiple ONUs through the ODN.

The PON is a point-to-multipoint network topology. The uplink transmission of the ONU needs to be coordinated by the OLT through bandwidth assignment, so as to avoid a conflict between signals sent by different ONUs. A PON system usually calculates an uplink bandwidth of each ONU through Dynamic Bandwidth Assignment (DBA). The traditional DBA algorithm generally depends on a status report of the ONU or a traffic detection of the OLT, only considers the size of the uplink bandwidth required by the ONU and the utilization of the uplink bandwidth, and seldom considers the factors, such as delay and jitter, of uplink bandwidth assignment.

With the development of a mobile service, the PON system has gradually become one of bearer technologies of the mobile service, and the mobile services have very strict requirements on the transmission delay of bearer networks. For example, at present, the industry requires that the transmission delay of the PON system bearing the 5G feedforward service is controlled within 100 microseconds. A DBA method only considering the bandwidth size will bring a large uplink data transmission delay, and the existing PON system is difficult to meet the transmission delay requirements required by the mobile service.

### Summary

The embodiments of the present disclosure provide a bandwidth assignment method and apparatus, and a bandwidth check method and apparatus, so as to at least solve the problem in the related art of the difficulty of a PON system in meeting the transmission delay requirements required by a mobile service.

According to an embodiment of the present disclosure, a bandwidth assignment method is provided, which may include the following operations. First relevant information about a bandwidth assigned to an ONU is obtained, the first relevant information at least including: service control signaling in a bandwidth-related protocol packet. The first relevant information is converted into first bandwidth information, and a bandwidth is assigned to the ONU according to the first bandwidth information, the first bandwidth information including: a bandwidth size corresponding to the bandwidth assigned to the ONU, a delay corresponding to the bandwidth assigned to the ONU, and a start time corresponding to the bandwidth assigned to the ONU.

According to an embodiment of the present disclosure, a bandwidth check method is provided, which may include the following operations. Interaction information between a remote service device and a local service device is checked to obtain a service control signaling in a bandwidth-related protocol packet in the interaction information. The service control signaling is converted into first bandwidth information, and a bandwidth is assigned to an ONU according to the first bandwidth information, the bandwidth information including: a bandwidth size corresponding to the bandwidth assigned to the ONU, a delay corresponding to the bandwidth assigned to the ONU, and a start time corresponding to the bandwidth assigned to the ONU.

According to an embodiment of the present disclosure, a bandwidth assignment apparatus is provided, which may include: a first obtaining module and a first assigning module. The first obtaining module is configured to obtain first relevant information about the bandwidth assigned to the ONU, the first relevant information at least including the service control signaling in the bandwidth-related protocol packet. The first assigning module is configured to convert a first relevant information into the first bandwidth information, and assign a bandwidth for the ONU according to the first bandwidth information, the first bandwidth information including: a bandwidth size corresponding to the bandwidth assigned to the ONU, a delay corresponding to the bandwidth assigned to the ONU, and a start time corresponding to the bandwidth assigned to the ONU.

According to an embodiment of the present disclosure, a bandwidth check apparatus is provided, which may include: a checking module and a third assigning module. The checking module is configured to check interaction information between a remote service device and a local service device to obtain a service control signaling in the bandwidth-related protocol packet in the interaction information. The third assigning module is configured to convert the service control signaling into the first bandwidth information, and assign a bandwidth to an ONU according to the first bandwidth information, the bandwidth information including: the bandwidth size corresponding to the bandwidth assigned to the ONU, a delay corresponding to the bandwidth assigned to the ONU, and a start time corresponding to the bandwidth assigned to the ONU.

According to yet another embodiment of the present application, a storage medium is also provided. The storage medium stores a computer program. The computer program is configured to execute, when running, operations in any of the above method embodiments.

According to yet another embodiment of the present application, an electronic device is also provided, which may include a memory and a processor. The memory stores a computer program. The processor is configured to run the computer program to execute operations in any of the above method embodiments.

By means of the embodiments of the present disclosure, bandwidth application and assignment no longer depends only on the traditional status report of the ONU or traffic detection of the OLT, nor only considers the bandwidth size. In addition to the bandwidth size, the DBA also considers the bandwidth delay and start time, so the problem in the related art of the difficulty of a PON system in meeting the transmission delay requirements required by a mobile service, thereby achieving the effect of reducing the transmission delay of the PON system.

### Brief Description of the Drawings

Fig. 1 is a flowchart of a bandwidth assignment method according to an embodiment of the present disclosure.
Fig. 2 is a flowchart of a bandwidth check method according to an embodiment of the present disclosure.
Fig. 3 is a structure diagram of a PON system architecture according to an embodiment of the present disclosure.
Fig. 4 is a flowchart of assigning a bandwidth to UE in a PON system according to an embodiment of the present disclosure.
Fig. 5 is a flowchart of assigning a bandwidth to UE in another PON system according to an embodiment of the present disclosure.
Fig. 6 is a flowchart of assigning a bandwidth in a PON system according to an embodiment of the present disclosure.
Fig. 7 is a structural block diagram of a bandwidth assignment apparatus according to an embodiment of the present disclosure.
Fig. 8 is a structural block diagram of a bandwidth check apparatus according to an embodiment of the present disclosure.

### Detailed Description of the Embodiments

The present disclosure is elaborated below with reference to the accompanying drawings and embodiments.

It is to be noted that the terms like "first" and "second" in the specification, claims and accompanying drawings of the present disclosure are used for differentiating the similar objects, but do not have to describe a specific order or a sequence.

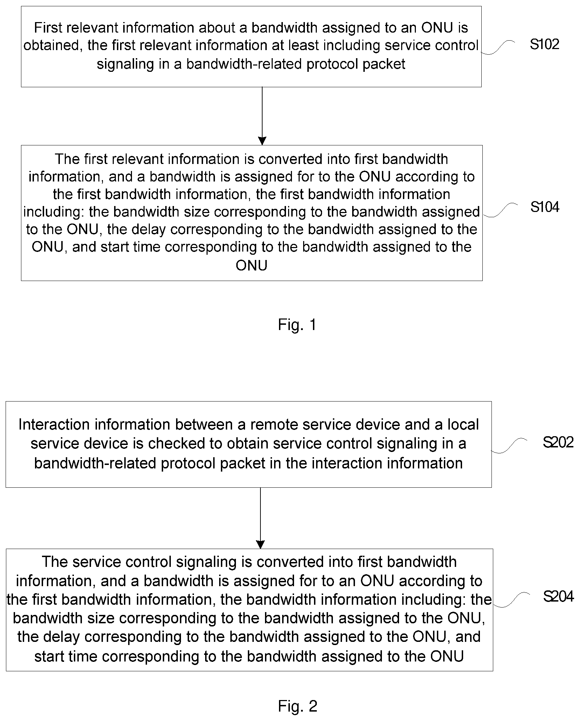

A bandwidth assignment method is provided in an embodiment. Fig. 1 is a flowchart of a bandwidth assignment method according to an embodiment of the present disclosure. As shown in Fig. 1, the flow may include the following operations.

In operation S102, first relevant information about a bandwidth assigned to an ONU is obtained, the first relevant information at least including service control signaling in a bandwidth-related protocol packet.

In operation S104, the first relevant information is converted into first bandwidth information, and a bandwidth is assigned to the ONU according to the first bandwidth information, the first bandwidth information including: a bandwidth size corresponding to the bandwidth assigned to the ONU, a delay corresponding to the bandwidth assigned to the ONU, and a start time corresponding to the bandwidth assigned to the ONU.

It is to be noted that there are mainly two delays described in the present embodiment. One of the delays is a time difference between the time when data reaches the ONU and the time when the data is sent to an OLT. The other is the cache time of data in the ONU, namely the delay of sending the data from the ONU to the OLT, minus the transmission time of the data from the ONU to the OLT.

It is to be noted that the start time in the present embodiment is the time corresponding to the start time of bandwidth assignment during the bandwidth assignment process.

Specifically, the service control signaling in the bandwidth-related protocol packet is not immutable but dynamic information updated in real time. Therefore, once the service control signaling is received, it is needed to determine whether it is the same as the original received service control signaling. If they are not the same, the bandwidth size and the delay need to be updated according to information contained in the service control signaling.

Optionally, that the first relevant information about the bandwidth assigned to the ONU is obtained may include at least one of the following: in a process that the ONU obtains the bandwidth-related protocol packet in a service flow, the service control signaling actively reported by the ONU is received; and in a process that the ONU obtains the bandwidth-related protocol packet in a service flow, first request information for requesting the ONU to report the service control signaling is sent to the ONU, and the service control signaling reported by the ONU according to the first request information is received.

For example, the interaction between the ONU and the OLT is taken as an example. The ONU receives multicast interaction information (IGMPjoin, leave, etc.) in the service flow in real time. The multicast interaction information carries the service control signaling in the bandwidth-related protocol packet. On the one hand, the ONU may actively report the received multicast interaction information. On the other hand, the ONU may not have enough time to report the multicast interaction information or the ONU cannot actively report the multicast interaction information because of needing to perform other functions; in this case, the OLT passes the first request information for requesting the ONU to report the service control signaling. Then, the ONU reports a service control signaling response in the multicast interaction information to the OLT.

On the other hand, the OLT itself can also receive multicast interaction information in the service flow in real time, and then perform subsequent operations according to the service control signaling in the bandwidth-related protocol packet carried in the multicast interaction information.

It should be pointed out that, in order to improve the assignment efficiency, the OLT and the ONU may negotiate in advance the type of the multicast interaction information received in the service flow in real time. For example, the service control signaling with the highest priority may be received in real time by the OLT itself. The service control signaling with the second highest priority may be received in real time and reported actively by the OLT. Finally, for the service control signaling with low priority, the OLT has no need to process it immediately, therefore, after needing to be processed, it may be sent to the ONU by sending the first request information, so as to obtain the service control signaling responded by the ONU.

Optionally, the method may further include that: second relevant information about the bandwidth assigned to the ONU is obtained, the second relevant information at least including: ONU device information and service types supported by the ONU; and the second relevant information is converted into second bandwidth information, and a bandwidth is assigned to the ONU according to the second bandwidth information, the second bandwidth information including: the bandwidth size corresponding to the bandwidth assigned to the ONU and the delay corresponding to the bandwidth assigned to the ONU.

Specifically, the ONU device information and the service types supported by the ONU are all information inherent to the ONU. Therefore, the determined bandwidth size and delay are all static information, which may be determined by obtaining and converting once.

Optionally, that the second relevant information about the bandwidth assigned to the ONU is obtained may include at least one of the following: in a process that the ONU obtains service information in a service flow, the service information corresponding to the service types supported by the ONU actively reported by the ONU is received; or, in a process that the ONU obtains the service information in a service flow, the first request information is sent to the ONU, and the service information reported by the ONU according to the first request information is received, the first request information being used for requesting the ONU to report the service information corresponding to the supported service types.

Optionally, the ONU device information actively reported by the ONU is received; or, a second request information is sent to the ONU, and the ONU device information reported by the ONU according to the second request information is received, the second request information being used for requesting the ONU to report the types of the ONU device information, and the types of the ONU device information include at least one of the following: a device type of the ONU and a type of a physical port of the ONU.

For example, the interaction between the ONU and the OLT is taken as an example. The ONU may obtain its own device type, physical port type, and supported service type. On the one hand, the ONU may actively report its own device type, physical port type, and supported service type. On the other hand, the ONU may not have enough time to report or the ONU cannot actively report because of needing to perform other functions, in this case, the OLT passes the second request information for requesting the ONU to report its own device type, physical port type, and supported service type. Then, as a response, the ONU will report its own device type, physical port type, and supported service type to the OLT.

It should be pointed out that, in order to improve the assignment efficiency, the OLT and the ONU may negotiate in advance a specific reporting manner. For example, the ONU actively reports its own device type, and the OLT may request the ONU to report the physical port type and the supported service type. Unnecessary details are omitted here.

Optionally, the method may further include that: after obtaining the relevant information, a controller converts the relevant information into the bandwidth information, and sends the bandwidth information to a DBA device for bandwidth assignment; or, after obtaining the relevant information, the controller sends the relevant information to the OLT; and the OLT converts the relevant information into the bandwidth information, and sends the bandwidth information to the DBA device for bandwidth assignment.

Optionally, the method may further include that: after obtaining the relevant information, the ONU converts the relevant information into the bandwidth information, and sends the bandwidth information to the DBA device for bandwidth assignment; or, after obtaining the relevant information, the ONU sends the relevant information to the OLT; and the OLT converts the relevant information into the bandwidth information, and sends the bandwidth information to the DBA device for bandwidth assignment.

It should be pointed out that the DBA device is the device configured to perform dynamic bandwidth assignment. The DBA device may reside in the OLT or may reside in other devices other than the OLT. The specific setting mode is determined according to actual needs.

Through the above description of implementation modes, those skilled in the art may clearly know that the method according to the above embodiments may be implemented by means of software plus a necessary common hardware platform, certainly by means of hardware; but in many cases, the former is the better implementation. Based on this understanding, the technical solution of the embodiments of the present disclosure substantially or the part making a contribution to the conventional art can be embodied in the form of software product; the computer software product is stored in a storage medium (for example, a Read-Only Memory (ROM)/Random Access Memory (RAM), a magnetic disk, and a compact disc) and includes a number of instructions to make a computer device (which can be a personal computer, a server or a network device, etc.) perform all or part of the method in each embodiment of the present disclosure.

A bandwidth check method is also provided in an embodiment. Fig. 2 is a flowchart of a bandwidth check method according to an embodiment of the present disclosure. As shown in Fig. 2, the flow may include the following operations.

In operation S202, interaction information between a remote service device and a local service device is checked to obtain a service control signaling in a bandwidth-related protocol packet in the interaction information.

In operation S204, the service control signaling is converted into first bandwidth information, and a bandwidth is assigned to an ONU according to the first bandwidth information, the bandwidth information including: a bandwidth size corresponding to the bandwidth assigned to the ONU, a delay corresponding to the bandwidth assigned to the ONU, and a start time corresponding to the bandwidth assigned to the ONU.

Optionally, the interaction information also includes: ONU device information and service types supported by the ONU. The method may further include that: the ONU device information or the service types supported by the ONU are converted into second bandwidth information, and a bandwidth is assigned to the ONU according to the second bandwidth information, the bandwidth information including: a bandwidth size corresponding to the bandwidth assigned to the ONU and a delay corresponding to the bandwidth assigned to the ONU.

It is to be noted that, in the present embodiment, combinations of the remote service device and the local service device include, but are not limited to, a Baseband Unit (BBU) and a Remote Radio Unit (RRU), a User End (UE) and a Central Unit (CU)/Distributed Unit (DU), and a sub-device and a site device.

Optionally, the OLT checks the interaction information between the remote service device and the local service device, converts a check result into the bandwidth information, and assigns a bandwidth to the ONU according to the bandwidth information.

Optionally, the ONU checks the interaction information between the remote service device and the local service device, and sends the check result to the OLT; the OLT converts the check result into the bandwidth information, and assigns the bandwidth to the ONU according to the bandwidth information.

Optionally, the ONU checks first interaction information between the remote service device and the local service device, and sends a first check result to the OLT; the OLT checks second interaction information between the remote service device and the local service device, converts the first check result received from the ONU and a second check result of the local check into the bandwidth information, and assigns the bandwidth to the ONU according to the bandwidth information.

In order to better understand the solutions recorded in the above embodiments, the following four scenarios are also provided in the second embodiment.

### First scenario

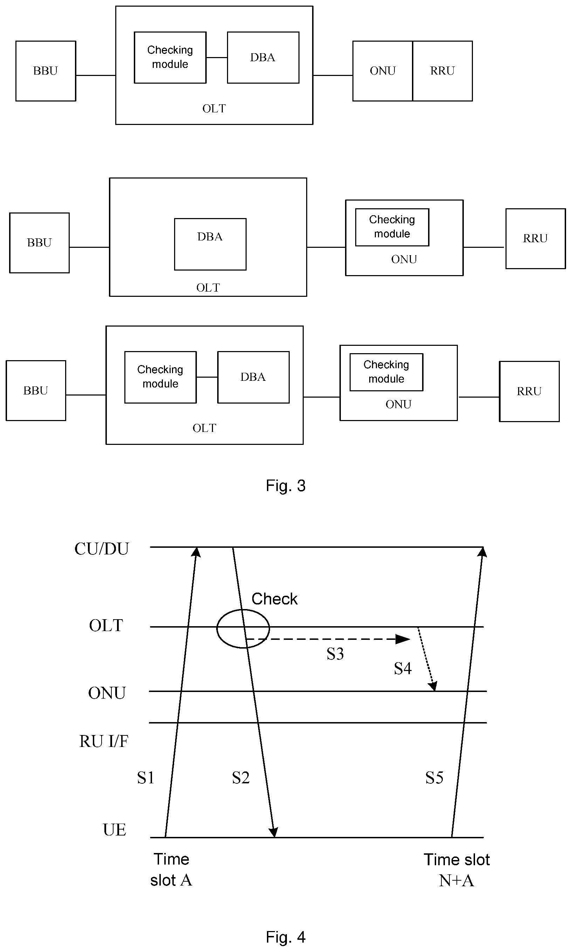

Fig. 3 is a structure diagram of a PON system architecture according to an embodiment of the present disclosure. The PON system is between the BBU and the RRU, carrying mobile services, such as a 4G/5G feedforward service. The protocol flows between the BBU and the RRU interact through the PON system. The PON system checks the protocol flows between the BBU and the RRU, obtains protocol packets related to the service types (such as a 5G service) and traffic volume/bandwidth, and generates DBA-related requirements after analyzing these data. The checking module may reside in the OLT, the ONU, or both, as shown in Fig. 3.

### Second scenario

Fig. 4 is a flowchart of assigning a bandwidth to UE in a PON system according to an embodiment of the present disclosure. The working process of the DBA device residing in the OLT is checked to assign a bandwidth for a mobile phone as the UE.

In operation S1, the UE sends data in a time slot N and requests a future time slot N+A (N+8 for LTE) for an idle port.

In operation S2, after performing bandwidth scheduling calculations, the CU/DU notifies each UE of idle port resources about the future time slot N+A allocated to it.

In operation S3, the OLT checks scheduling assignment of the time slot N+A which is sent by the CU/DU to each UE, and matches the time slot N+A to the RRU, the ONU, a Transmission Container (T-CONT), and even a GPON Encapsulation Method-Port (GEM-Port).

In operation S4, the OLT calculates the corresponding feedforward traffic volume of each RRU according to the checked scheduling assignment to each ONU, and the OLT further matches the bandwidth of each RRU to the T-CONT and assigns the bandwidth to the ONU.

In operation S5, each UE sends uplink services in the time slot N+A, these services are processed in the RRU and transmitted on the PON as a feedforward data packet, at the same time, each UE sends a request for a future time slot N+2*A.

### Third Scenario

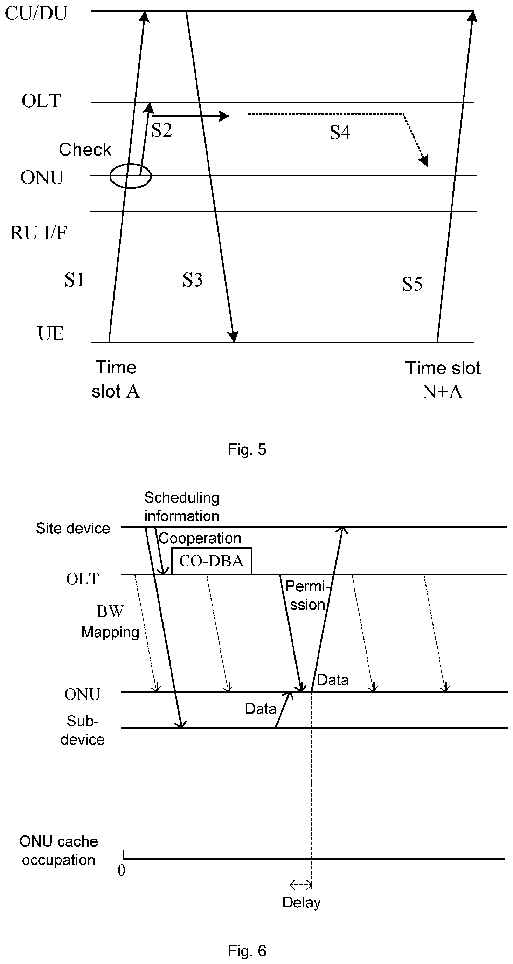

Fig. 5 is a flowchart of assigning a bandwidth to UE in another PON system according to an embodiment of the present disclosure. The working process of the DBA device residing in the OLT is checked to assign a bandwidth for a mobile phone as the UE.

In operation S1, the UE sends data in the time slot N and requests a future time slot N+A (N+8 for LTE) for the idle port.

In operation S2, the ONU checks the request for the time slot N+A, and converts the request into a DBA request and sends it to the OLT.

In operation S3, after performing the bandwidth scheduling calculations, the CU/DU notifies each UE of the idle port resources about the future time slot N+A allocated to it.

In operation S4, the OLT calculates the corresponding feedforward traffic volume of each RRU, and the OLT further matches the bandwidth of each RRU to the T-CONT and assigns the bandwidth to the ONU.

In operation S5, each UE sends the uplink services in the time slot N+A, these services are processed in the RRU and transmitted on the PON as the feedforward data packet, at the same time, each UE sends the request for the future time slot N+2*A.

### Fourth scenario

Fig. 6 is a flowchart of assigning a bandwidth in a PON system according to an embodiment of the present disclosure. As shown in Fig. 6, when the site device controls the uplink service of the sub-device, the site device knows the arrival time of uplink transmission and service size. If the OLT shares scheduling information with the site device, the OLT can execute the DBA without waiting for the ONU to send a status report, which means that the delay can be reduced and the point-to-point service transmission can be almost achieved.

The present embodiment also provides a bandwidth assignment apparatus, which is configured to implement the above embodiments and preferred implementations. The embodiments which have been elaborated will not be repeated here. The term "module" used below can realize a combination of software and/or hardware with an intended function. Although the device described in the following embodiment is realized through software better, the realization through hardware or a combination of software and hardware is possible and conceived.

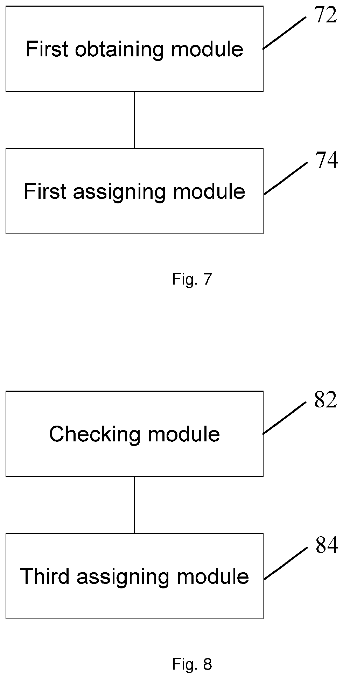

Fig. 7 is a structure diagram of a bandwidth assignment apparatus according to an embodiment of the present disclosure. As shown in Fig. 7, the apparatus may include: a first obtaining module 72 and a first assigning module 74.

The first obtaining module 72 is configured to obtain the first relevant information about the bandwidth assigned to the ONU, the first relevant information at least including the service control signaling in the bandwidth-related protocol packet.

The first assigning module 74 is configured to convert the first relevant information into a first bandwidth information, and assign a bandwidth for the ONU according to the first bandwidth information, the first bandwidth information including: a bandwidth size corresponding to the bandwidth assigned to the ONU, a delay corresponding to the bandwidth assigned to the ONU, and a start time corresponding to the bandwidth assigned to the ONU.

Optionally, the apparatus may also include: a second obtaining module, configured to obtain the second relevant information about the bandwidth assigned to the ONU, the second relevant information at least including: the ONU device information and the service types supported by the ONU; and a second assigning module, configured to convert the second relevant information into the second bandwidth information, and assign a bandwidth for the ONU according to the second bandwidth information, the second bandwidth information including: the bandwidth size corresponding to the bandwidth assigned to the ONU and the delay corresponding to the bandwidth assigned to the ONU.

The present embodiment also provides a bandwidth check apparatus, which is configured to implement the above embodiments and preferred implementations. The embodiments which have been elaborated will not be repeated here. The term "module" used below can realize a combination of software and/or hardware with an intended function. Although the device described in the following embodiment is realized through software better, the realization through hardware or a combination of software and hardware is possible and conceived.

Fig. 8 is a structural block diagram of a bandwidth check apparatus according to an embodiment of the present disclosure. As shown in Fig. 8, the apparatus may include: a checking module 82 and a third assigning module 84.

The checking module 82 is configured to check the interaction information between the remote service device and the local service device to obtain a service control signaling in the bandwidth-related protocol packet in the interaction information.

The third assigning module 84 is configured to convert the service control signaling into the first bandwidth information, and assign a bandwidth to the ONU according to the first bandwidth information, the bandwidth information including: the bandwidth size corresponding to the bandwidth assigned to the ONU, a delay corresponding to the bandwidth assigned to the ONU, and a start time corresponding to the bandwidth assigned to the ONU.

Optionally, the checking module 82 is further configured to check the interaction information between the remote service device and the local service device to obtain the ONU device information and the service types supported by the ONU in the interaction information. The apparatus may also include: a fourth assigning module, configured to convert the ONU device information or the service types supported by the ONU into the second bandwidth information, and assign a bandwidth to the ONU according to the second bandwidth information, the bandwidth information including: a bandwidth size corresponding to the bandwidth assigned to the ONU and a delay corresponding to the bandwidth assigned to the ONU.

It is to be noted that, each of the above modules may be realized by software or hardware. For the latter, the each of the above modules may be realized by, but not limited to, the following way: all of the above modules are in the same processor; or, the above modules are respectively in different processors in form of any combination.

An embodiment of the present disclosure also provides a computer-readable storage medium, in which a computer program is stored. The computer program is configured to perform, when running, the operations in any of the above method embodiments.

Optionally, in the present embodiment, the storage medium may be configured to store a computer program for executing the following operations.

In operation S1, the first relevant information about the bandwidth assigned to the ONU is obtained, the first relevant information at least including the service control signaling in the bandwidth-related protocol packet.

In operation S2, the first relevant information is converted into the first bandwidth information, and a bandwidth is assigned to the ONU according to the first bandwidth information, the first bandwidth information including: the bandwidth size corresponding to the bandwidth assigned to the ONU, the delay corresponding to the bandwidth assigned to the ONU, and the start time corresponding to the bandwidth assigned to the ONU.
Or,

In operation S1, the interaction information between the remote service device and the local service device is checked to obtain the service control signaling in the bandwidth-related protocol packet in the interaction information.

In operation S2, the service control signaling is converted into the first bandwidth information, and a bandwidth is assigned to the ONU according to the first bandwidth information, the bandwidth information including: the bandwidth size corresponding to the bandwidth assigned to the ONU, the delay corresponding to the bandwidth assigned to the ONU, and the start time corresponding to the bandwidth assigned to the ONU.

Optionally, in the present embodiment, the storage media include, but not limited to, a USB flash disk, an ROM, an RAM, a mobile hard disk, a magnetic disk, a compact disc, and other media capable of storing the computer program.

An embodiment of the present application also provides an electronic device, which includes a memory and a processor. The memory stores a computer program. The processor is configured to run the computer program to execute the operations in any of the above method embodiments.

Optionally, the electronic device may also include a transmission device and an input/output device. The transmission device is connected with the processor, and the input/output device is connected with the processor.

Optionally, in the present embodiment, the processor may be configured to execute the following operations through the computer program.

In operation S1, the first relevant information about the bandwidth assigned to the ONU is obtained, the first relevant information at least including the service control signaling in the bandwidth-related protocol packet.

In operation S2, the first relevant information is converted into the first bandwidth information, and a bandwidth is assigned to the ONU according to the first bandwidth information, the first bandwidth information including: the bandwidth size corresponding to the bandwidth assigned to the ONU, the delay corresponding to the bandwidth assigned to the ONU, and the start time corresponding to the bandwidth assigned to the ONU.
Or,

In operation S1, the interaction information between the remote service device and the local service device is checked to obtain the service control signaling in the bandwidth-related protocol packet in the interaction information.

In operation S2, the service control signaling is converted into the first bandwidth information, and a bandwidth is assigned to the ONU according to the first bandwidth information, the bandwidth information including: the bandwidth size corresponding to the bandwidth assigned to the ONU, the delay corresponding to the bandwidth assigned to the ONU, and the start time corresponding to the bandwidth assigned to the ONU.

Optionally, the specific examples in the present embodiment may refer to the examples described in the above embodiments and alternative embodiments.

It is apparent that those skilled in the art should appreciate that the above modules and operations in the embodiments of the present disclosure may be implemented by a general-purpose computing device, and they may be centralized in a single computing device or distributed on a network composed of multiple computing devices; optionally, they may be implemented by a program code which is capable of being executed by the computing device, so that they may be stored in a storage device and executed by the computing device; and in some situations, the presented or described operations may be executed in an order different from that described here; or they are made into integrated circuit modules, respectively; or multiple modules and operations of them are made into a single integrated circuit module to realize. Therefore, the embodiments of the present disclosure are not limited to any specific hardware and software combination.

The above is only the preferred embodiments of the present disclosure and not intended to limit the present disclosure; for those skilled in the art, the present disclosure may have various modifications and changes. Any modifications, equivalent replacements, improvements and the like within the principle of the present disclosure should fall within the protection scope of the claims of the present disclosure.

### Industrial Applicability

As mentioned above, a bandwidth assignment method and apparatus, and a bandwidth check method and apparatus provided by the embodiments of the present disclosure have the following beneficial effect: the problem in the related art of the difficulty of a PON system in meeting the transmission delay requirements required by a mobile service is solved, thereby achieving the effect of reducing the transmission delay of the PON system.

## Claims

1. A bandwidth assignment method, comprising:
obtaining first relevant information about a bandwidth assigned to an Optical Network Unit (ONU), wherein the first relevant information at least comprises: service control signaling in a bandwidth-related protocol packet; and
converting the first relevant information into first bandwidth information, and assigning a bandwidth to the ONU according to the first bandwidth information, wherein the first bandwidth information comprises: a bandwidth size corresponding to the bandwidth assigned to the ONU, a delay corresponding to the bandwidth assigned to the ONU, and a start time corresponding to the bandwidth assigned to the ONU.

2. The method according to claim 1, wherein obtaining the first relevant information about the bandwidth assigned to the ONU comprises at least one of the following:
in a process that the ONU obtains the bandwidth-related protocol packet in a service flow, receiving the service control signaling actively reported by the ONU; and
in a process that the ONU obtains the bandwidth-related protocol packet in a service flow, sending, to the ONU, first request information for requesting the ONU to report the service control signaling, and receiving the service control signaling reported by the ONU according to the first request information.

3. The method according to claim 1, further comprising:
obtaining second relevant information about the bandwidth assigned to the ONU, wherein the second relevant information at least comprises: ONU device information and service types supported by the ONU;
converting the second relevant information into second bandwidth information, and assigning a bandwidth to the ONU according to the second bandwidth information, wherein the second bandwidth information comprises: the bandwidth size corresponding to the bandwidth assigned to the ONU and the delay corresponding to the bandwidth assigned to the ONU.

4. The method according to claim 3, wherein obtaining the second relevant information about the bandwidth assigned to the ONU comprises at least one of the following:
in a process that the ONU obtains service information in a service flow, receiving the service information corresponding to the service types supported by the ONU actively reported by the ONU; and
in a process that the ONU obtains the service information in a service flow, sending first request information to the ONU, and receiving the service information reported by the ONU according to the first request information, wherein the first request information is used for requesting the ONU to report the service information corresponding to the supported service types.

5. The method according to claim 3, wherein obtaining the second relevant information about the bandwidth assigned to the ONU comprises at least one of the following:
receiving the ONU device information actively reported by the ONU; and
sending second request information to the ONU, and receiving the ONU device information reported by the ONU according to the second request information, wherein the second request information is used for requesting the ONU to report types of the ONU device information, and the types of the ONU device information comprise at least one of the following: a device type of the ONU and a type of a physical port of the ONU.

6. The method according to any one of claims 1 to 5, further comprising:
converting, by an Optical Line Terminal (OLT), the relevant information into the bandwidth information after obtaining the first relevant information, and sending the bandwidth information to a Dynamic Bandwidth Assignment (DBA) device for bandwidth assignment.

7. The method according to any one of claims 1 to 5, further comprising:
converting, by a controller, the relevant information into the bandwidth information after obtaining the first relevant information, and sending the bandwidth information to a Dynamic Bandwidth Assignment (DBA) device for bandwidth assignment;
or,
sending, by the controller, the relevant information to the OLT after obtaining the first relevant information; and converting, by the OLT, the relevant information into the bandwidth information, and sending the bandwidth information to a DBA device for bandwidth assignment.

8. The method according to any one of claims 1 to 5, further comprising:
converting, by the ONU, the relevant information into the bandwidth information after obtaining the first relevant information, and sending the bandwidth information to a Dynamic Bandwidth Assignment (DBA) device for bandwidth assignment;
or,
sending, by the ONU, the relevant information to the OLT after obtaining the first relevant information; and converting, by the OLT, the relevant information into the bandwidth information, and sending the bandwidth information to a DBA device for bandwidth assignment.

9. A bandwidth check method, comprising:
checking interaction information between a remote service device and a local service device to obtain a service control signaling in a bandwidth-related protocol packet in the interaction information;
converting the service control signaling into first bandwidth information, and assigning a bandwidth to an Optical Network Unit (ONU) according to the first bandwidth information, wherein the bandwidth information comprises: a bandwidth size corresponding to the bandwidth assigned to the ONU, a delay corresponding to the bandwidth assigned to the ONU, and a start time corresponding to the bandwidth assigned to the ONU.

10. The method according to claim 1, wherein the interaction information further comprises: ONU device information and service types supported by the ONU; the method further comprises:
converting the ONU device information or the service types supported by the ONU into second bandwidth information, and assigning a bandwidth to the ONU according to the second bandwidth information, wherein the bandwidth information comprises: a bandwidth size corresponding to the bandwidth assigned to the ONU and a delay corresponding to the bandwidth assigned to the ONU.

11. The method according to claim 9 or 10, wherein,
an Optical Line Terminal (OLT) checks the interaction information between the remote service device and the local service device; and
the OLT converts a check result into bandwidth information, and assigning a bandwidth to the ONU according to the bandwidth information.

12. The method according to claim 9 or 10, wherein,
the ONU checks the interaction information between the remote service device and the local service device;
the ONU sends a check result to the OLT; and
the OLT converts the check result into a bandwidth information, and assigns the bandwidth to the ONU according to the bandwidth information.

13. The method according to claim 9 or 10, wherein,
the ONU checks first interaction information between the remote service device and the local service device;
the ONU sends a first check result to the OLT;
the OLT checks second interaction information between the remote service device and the local service device; and
the OLT converts the first check result received from the ONU and a second check result of a local check into a bandwidth information, and assigns the bandwidth to the ONU according to the bandwidth information.

14. A bandwidth assignment apparatus, comprising:
a first obtaining module, configured to obtain first relevant information about a bandwidth assigned to an Optical Network Unit (ONU), wherein the first relevant information at least comprises service control signaling in a bandwidth-related protocol packet; and
a first assigning module, configured to convert the first relevant information into a first bandwidth information, and assign a bandwidth for the ONU according to the first bandwidth information, wherein the first bandwidth information comprises: a bandwidth size corresponding to the bandwidth assigned to the ONU, a delay corresponding to the bandwidth assigned to the ONU, and a start time corresponding to the bandwidth assigned to the ONU.

15. The apparatus according to claim 14, further comprising:
a second obtaining module, configured to obtain second relevant information about the bandwidth assigned to the ONU, wherein the second relevant information at least comprises ONU device information and service types supported by the ONU; and
a second assigning module, configured to convert the second relevant information into second bandwidth information, and assign a bandwidth for the ONU according to the second bandwidth information, wherein the second bandwidth information comprises: the bandwidth size corresponding to the bandwidth assigned to the ONU and the delay corresponding to the bandwidth assigned to the ONU.

16. A bandwidth check apparatus, comprising:
a checking module, configured to check interaction information between a remote service device and a local service device to obtain service control signaling in a bandwidth-related protocol packet in the interaction information; and
a third assigning module, configured to convert the service control signaling into first bandwidth information, and assign a bandwidth for an Optical Network Unit (ONU) according to the first bandwidth information, wherein the bandwidth information comprises: the bandwidth size corresponding to the bandwidth assigned to the ONU, the delay corresponding to the bandwidth assigned to the ONU, and start time.

17. The apparatus according to claim 16, wherein the checking module is further configured to check interaction information between a remote service device and a local service device to obtain ONU device information and service types supported by the ONU in the interaction information;
the apparatus further comprises:
a fourth assigning module, configured to convert the ONU device information or the service types supported by the ONU into second bandwidth information, and assign a bandwidth for the ONU according to the second bandwidth information, wherein the bandwidth information comprises: the bandwidth size corresponding to the bandwidth assigned to the ONU and the delay corresponding to the bandwidth assigned to the ONU.

18. A computer-readable storage medium, in which a computer program is stored, wherein when running, the computer program is configured to perform the method according to any one of claims 1 to 8 or the method according to any one of claims 9 to 13.

19. An electronic device, comprising a memory and a processor, wherein the memory stores a computer program, and the processor is configured to run the computer program, so as to perform the method according to any one of claims 1 to 8 or the method according to any one of claims 9 to 13.
